(19) Europäisches Patentamt / European Patent Office / Office européen des brevets

(11) **EP 4 291 885 B1**

(12) **EUROPÄISCHE PATENTSCHRIFT**

(45) Veröffentlichungstag und Bekanntmachung des Hinweises auf die Patenterteilung:
**04.02.2026   Patentblatt 2026/06**

(21) Anmeldenummer: **22727018.8**

(22) Anmeldetag: **29.04.2022**

(51) Internationale Patentklassifikation (IPC):
**G01N 29/04** *(2006.01)*   **F16C 19/00** *(2006.01)*
**G01N 29/14** *(2006.01)*   **G01N 29/44** *(2006.01)*
**G07C 5/00** *(2006.01)*

(52) Gemeinsame Patentklassifikation (CPC):
**G01N 29/14; G01N 29/043; G01N 29/4472; G01N 29/4481; G01N 29/449;** F16C 2233/00; G01N 2291/0258

(86) Internationale Anmeldenummer:
**PCT/EP2022/061468**

(87) Internationale Veröffentlichungsnummer:
**WO 2022/233724 (10.11.2022 Gazette 2022/45)**

(54) **VORRICHTUNG ZUM BESTIMMEN DES IST-ZUSTANDS UND/ODER DER RESTLEBENSDAUER VON STRUKTURBAUTEILEN EINER ARBEITSMASCHINE**

APPARATUS FOR DETERMINING THE ACTUAL STATE AND/OR THE REMAINING SERVICE LIFE OF STRUCTURAL COMPONENTS OF A WORK MACHINE

APPAREIL DE DÉTERMINATION DE L'ÉTAT RÉEL ET/OU DE LA DURÉE DE VIE RESTANTE DE COMPOSANTS STRUCTURAUX D'UNE MACHINE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **06.05.2021   DE 102021111797**
                  **06.08.2021   DE 102021120491**

(43) Veröffentlichungstag der Anmeldung:
**20.12.2023   Patentblatt 2023/51**

(73) Patentinhaber: **Liebherr-Components Biberach GmbH**
**88400 Biberach an der Riß (DE)**

(72) Erfinder:
• **MUPENDE, Yvon Ilaka**
  **89231 Neu-Ulm (DE)**
• **SCHIERHOLZ, Lennart**
  **88400 Biberach an der Riß (DE)**

(74) Vertreter: **Lorenz Seidler Gossel Part. mbB**
**Widenmayerstr. 23**
**80538 München (DE)**

(56) Entgegenhaltungen:
**EP-A1- 2 402 731        DE-A1- 4 447 288**
**US-A1- 2021 072 727**

• **MICHAEL OSTERKAMP ET AL: "Kombinierte Infrarot- und Akustik-Mess systeme zur Detektion von Lagerschäden an Radsätzen - Combined infrared and acoustic measurement systems for detecting bearing damage on wheelsets", SIGNAL UND DRAHT: SIGNALLING & DATACOMMUNICATION, vol. 109, no. 4, 10 April 2017 (2017-04-10), DE, pages 65 - 72, XP055365766, ISSN: 0037-4997**

## Beschreibung

Die vorliegende Erfindung betrifft eine Vorrichtung zum Bestimmen des Ist-Zustands und/oder der Restlebensdauer von Strukturbauteilen, beispielsweise Großwälzlagern, einer Arbeitsmaschine, insbesondere Bau-, Materialumschlags- und/oder Fördermaschine, mit einer Sensorik zum Erfassen von Zustands-Informationen betreffend das Strukturbauteil sowie einer Auswerteeinrichtung zum Auswerten der erfassten Zustandsinformationen und Bestimmen des Ist-Zustands und/oder der Restlebensdauer anhand eines Vergleichs der erfassten Zustandsinformationen mit vorbestimmten Schadenscharakteristika.

Bei Baumaschinen wie Baggern, Kranen, Muldenkippern, Planierraupen, Bulldozern oder Seilbaggern, oder Materialumschlagsmaschinen oder Förderanlagen wie Staplern und Ladern oder anderen größeren Arbeitsmaschinen wie Oberflächenfräsern oder Schiffskranen ist es gleichermaßen wichtig und schwierig, die Restlebensdauer bzw. die verbleibende Zeitspanne bis zum notwendigen Austausch eines Strukturteils vorherzusagen. Fällt eine Baumaschine im Einsatz auf einer Baustelle aus, weil beispielsweise ein Lager sich frisst oder überhitzt, kann oft nicht gleich eine passende Ersatzmaschine beschafft und an die Baustelle angeliefert werden, sodass während der für die Reparatur benötigten Reparaturzeit auf der Baustelle Verzögerungen anfallen, wobei oft nicht nur die Aufgaben der ausgefallenen Baumaschine selbst liegen bleiben, sondern aufgrund des verzahnten Ineinandergreifens der verschiedenen Baumaschinen auch andere Abläufe Verzögerungen erfahren. Eine ähnliche Problematik ergibt sich ebenfalls bei den vorgenannten Materialumschlagsmaschinen und Förderanlagen.

Dabei sind es oft nur einzelne Komponenten bzw. Strukturbauteile, die per se einfach zu tauschen sind und keine größeren Folgeverzögerungen auslösen würden, wenn der Austausch rechtzeitig planbar ist, andererseits aber auch größere Reparaturaufwände verursachen können, wenn bei einem Bruch des kleinen Strukturbauteils auch andere Maschinenkomponenten in Mitleidenschaft gezogen werden.

Dabei ist es an sich normal, dass jeweilige Strukturbauteile mit fortschreitender Betriebsdauer einen gewissen Verschleiß zeigen, ohne dass dies gleich einen Austausch der Komponente bedingen würde. Solange die Funktion des Bauteils gewährleistet ist und kein Ausfall droht, werden solche für den Betrieb ungefährlichen Verschleißerscheinungen in Kauf genommen, um die Lebensdauer auszureizen. Solche kleineren, erträglichen Verschleißerscheinungen können beispielsweise kleine, für die Festigkeit unkritische Haarrisse oder kleinere Oberflächenausbrüche bzw. Pittings weniger funktionsrelevanter Oberflächen sein. Solche Verschleißerscheinungen können aber auch andere Bauteilveränderungen wie Nachlassen der Elastizität oder zunehmendes Lagerspiel sein.

Je nachdem, wie die Strukturbauteile einer Arbeitsmaschine überwacht werden, kann es sehr schwierig sein, kritische Schädigungen von unkritischen Schädigungen zu unterscheiden, da die Signalantwort der bauteilüberwachenden Sensorik schon bei kleineren Bauteilveränderungen mehr oder minder große Veränderungen zeigen kann.

Hinzu kommt, dass vielerlei verschiedene Schädigungen und damit einhergehende Schadenscharakteristika an den Strukturbauteilen auftreten können, die sich in entsprechend unterschiedlichen Auffälligkeiten der Sensordaten niederschlagen können. Beispielsweise können Vibrationen, die durch einen üblichen, sozusagen gleichmäßigen Verschleiß an den Zahnrädern einer Getriebestufe auftreten, anders ausfallen als Vibrationen, die beispielsweise durch einen einzelnen, stärker geschädigten Zahn eines Verzahnungspaares bedingt sind. Wiederum ein anderes Vibrationsbild kann sich durch einen Schmierstoffmangel und eine damit einhergehende Schwergängigkeit durch Überhitzung oder bei einem unrunden Lauf infolge Verschmutzung oder zu großer Lagerluft ergeben.

Es wurden daher bereits sensorische Überwachungssysteme für Baumaschinen vorgeschlagen, die die Bestimmung der Ist-Zustände von Baumaschinen anhand gemessener Sensordaten objektivieren sollen. Dabei ist es beispielsweise bekannt, bestimmte Betriebsparameter der Baumaschine zu überwachen und bei Unregelmäßigkeiten bzw. ungewöhnlichen Werten der gemessenen Betriebsparameter einen Fehlercode abzugeben, vgl. beispielsweise JP-OS-8-144 312. Solche Fehlercodes sind per se jedoch wenig aussagekräftig bzw. verlässlich, da beispielsweise ein kurzzeitiges Überschreiten einer zulässigen Drehzahl, wie es beispielsweise bei Bergabfahrten in einer Baustellenzufahrt auftreten kann, noch keine verlässliche Aussage über eine dadurch herbeigeführte Motorschädigung zulässt.

Die Schrift DE 44 47 288 A1 offenbart ein Maschinenfehlerdiagnosesystem und - verfahren. Hierbei nutzt das System eine Kombination aus neuronalen Netzwerken, Expertensystemen, physikalischen Modellen und Fuzzy-Logik.

Die Schrift US 2021/072727 A1 offenbart eine Baumaschine, insbesondere einen Kran, und ein Verfahren zu deren Steuerung.

Michael Osterkamp et al. (SIGNAL UND DRAHT: SIGNALLING & DATACOMMUNICATION, Bd. 109, Nr. 4, 10. April 2017 (2017-04-10), Seiten 65-72, XP055365766, DE, ISSN: 0037-4997) beschreibt den kombinierten Einsatz von Infrarot- und Akustikmesssystemen zur Erkennung von Lagerschäden an Radsätzen.

Die Schrift EP 2 402 731 A1 offenbart ein Verfahren zum Training eines Systems zur Klassifikation eines Wälzlagerzustands sowie ein Verfahren und ein System zur Klassifikation eines Wälzlagerzustands.

Die Schrift DE 101 45 571 A1 der Anmelderin Komatsu schlägt ferner ein Überwachungssystem für Baumaschinen vor, welches den Grad einer Schädigung bzw. Abnormalität differenzierter vorhersagen will. Hierzu wird einerseits der Abgasdruck und die Abgastemperatur des Baumaschinendiesels sensorisch überwacht und andererseits mittels einer speziellen Analysevorrichtung das Schmieröl auf bestimmte Bestandteile wie Eisenpartikel hin analysiert. Zusätzlich zu diesen sensorischen Überwachungsgrößen hält die genannte Schrift es allerdings weiterhin für notwendig, in die automatisierte Beurteilung des Ist-Zustands der Baumaschine das Ergebnis einer Sichtprüfung einfließen zu lassen, die ein versierter Wartungsmitarbeiter durchführt. Dieses vorbekannte Überwachungssystem für Baumaschinen leidet einerseits an einer begrenzten Verlässlichkeit der Zustandsaussage. Durch die überwachten Abgasgrößen Abgastemperatur und Abgasdruck können vorrangig nur Probleme am Diesel ermittelt werden. Zum anderen ist das Überwachungssystem trotzdem relativ aufwändig, da Sichtprüfungen von Wartungsmitarbeitern durchgeführt werden müssen.

Der vorliegenden Erfindung liegt daher die Aufgabe zugrunde, eine verbesserte Vorrichtung zum Bestimmen des Ist-Zustands und/oder der Restlebensdauer einer Baumaschine zu schaffen, die Nachteile des Standes der Technik vermeidet und letzteren in vorteilhafter Weise weiterbildet. Insbesondere soll eine verlässliche, an mobilen Baumaschinen einfach zu realisierende Ist-Zustands- und/oder Restlebensdauerbestimmung erreicht werden, die ein rechtzeitiges Einleiten und Planen von Wartungs- bzw. Reparaturmaßnahmen auch durch nicht-geschulte Wartungsmitarbeiter mit einer ausreichenden Vorlaufzeit ermöglicht.

Erfindungsgemäß wird die genannte Aufgabe durch eine Vorrichtung durch Anspruch 1 gelöst. Bevorzugte Ausgestaltungen der Erfindung sind Gegenstand der abhängigen Ansprüche.

Um der Vielfalt möglicher Schadenscharakteristika gerecht zu werden, wird also vorgeschlagen, ausgehend von der Konstruktion bzw. den Geometrie- und Materialdaten synthetische Schadenscharakteristika in Form von Samples bzw. Referenzbeispielen künstlich zu generieren und diese synthetisch generierten Schadenscharakteristika laufend anzupassen durch Rückführen realer, aus den Sensordaten ermittelten Zustandsinformationen. Erfindungsgemäß ist eine aktive Datenbankeinrichtung zum Bereithalten der Schadenscharakteristika vorgesehen, an die eine Bestimmungseinrichtung zum Bestimmen der Schadenscharakteristika aus Konstruktionsdaten des Strukturbauteils sowie eine Anpasseinrichtung zum Anpassen der vorbestimmten Schadenscharakteristika anhand der von der Auswerteeinrichtung bestimmten Ist-Zustands- und/oder Restlebensdauer-Informationen angebunden sind. Durch die synthetische Generierung von Schadenscharakteristika aus den Konstruktionsdaten des Strukturbauteils einerseits und die dann erfolgende Anpassung der synthetisch generierten Schadenscharakteristika durch Rückmeldung der ausgewerteten Zustands- und/oder Restlebensdauer-Informationen kann ein komplexes Schadenscharakteristika-Modell für die Bestimmung des Ist-Zustands und/oder der Restlebensdauer geschaffen werden, das der Vielfalt an möglichen Schädigungen gerecht wird und eine hohe Treffsicherheit bei der Bestimmung des Ist-zustands bzw. der Restlebensdauer beschert.

Bei der Bestimmung der synthetischen Schadenscharakteristika können verschiedene Konstruktionsdaten herangezogen werden, um die Parameter bzw. den Datensatz zu berechnen, der das jeweilige Schadenscharakteristik-Sample ausmacht. Beispielsweise können für ein Wälzlager aus Konstruktionsdaten wie Wälzkörperzahl, Reihenzahl, bestimmungsgemäße Drehzahl und/oder geometrischen Größen wie Durchmesser, Laufbahnbreite oder Wälzkreisdurchmesser und/oder Materialdaten des Strukturbauteils wie Wälzkörper- und Laufbahnhärte oder Wälzkörper- und Laufbahnwerkstoff relevante Schadensindikatoren wie die Überrollfrequenz des Lageraußenrings, ein Temperaturverlauf über der Betriebszeit, oder ein Schallemissionsmuster berechnet werden bzw. das Frequenzspektrum des Hüllkurvensignals für eine bestimmte Drehzahl bestimmt werden. Die Bestimmungseinrichtung zum Bestimmen der Schadenscharakteristiken aus Konstruktionsdaten weist einen Baustein zum Bestimmen und/oder Berechnen kinematischer Frequenzen aus Geometriedaten und/oder Betriebsdaten wie Drehzahl und/oder Bewegungsgeschwindigkeit und ggf. Berücksichtigung von Materialdaten wie Gewicht oder Härte auf, wobei der genannte Baustein die kinematischen Frequenzen vorzugsweise unabhängig von einwirkenden äußeren Kräften oder Energien bestimmt.

Die genannte Bestimmungseinrichtung weist ferner einen Anpassbaustein auf, um Schwingungs- bzw. Frequenzmuster bzw. -spektren, die verschiedenen Schadenstypen oder Schadenmustern entsprechen, mithilfe der berechneten bzw. bestimmten Kinematik, insbesondere mithilfe der vorgenannten kinematischen Frequenz aus Geometriedaten, an das jeweilige System anzupassen und zu transformieren, sodass adaptierte Frequenzmuster bzw. -spektren generiert werden, die verschiedenen Schadenstypen bzw. -mustern des konkreten Systems bzw. des konkreten, interessierten Bauteils gerecht werden. Die noch nicht adaptierten Ausgangs-Frequenzmuster bzw. -spektren können zuvor an anderen, realen Bauteilen durch Messung bestimmt werden oder sind auch in Katalogform aus Schadensform-Bibliotheken bekannt. Beispielsweise kann an die Bestimmungseinrichtung ein Schadensmuster-Speicher angebunden sein, aus dem die Bestimmungseinrichtung die noch nicht adaptierten Frequenzmuster nehmen bzw. auslesen und dann mithilfe der zuvor bestimmten kinematischen Frequenz bzw. der Kinematik des konkreten Bauteils adaptieren kann. Die adaptierten Frequenzmuster bzw. -spektren können dann wieder in einem Speicher abgelegt werden.

Treten an einem Lager bspw. örtlich begrenzte Schäden auf, wie z. B. Wälzkörpereindrücke, Stillstandskorrosion oder Ausbrüche, sind diese bspw. durch Schwingungsmessungen feststellbar. Beim Überrollen lokaler Vertiefungen entstehen Stoßwellen, die einerseits bei der synthetischen Bestimmung berechnet oder geschätzt werden können und andererseits durch Weg-, Geschwindigkeits- oder Beschleunigungsaufnehmer oder ggf. andere Sensoren aufgezeichnet werden können. So kann bspw. durch einen Abgleich der erfassten Überrollfrequenz mit vorab synthetisch bestimmten Überrollfrequenz-Schadensbildern der Ist-Zustand bzw. eine Schädigung des Lagers bestimmt werden.

In ähnlicher Weise kann bspw. aus den genannten Konstruktionsdaten auch ein Körperschallmuster des Strukturbauteils berechnet, geschätzt oder in anderer Weise bestimmt werden, und mit einem realen Körperschallmuster, das mittels eines oder mehreren Körperschallsensoren am Strukturbauteil erfasst werden kann, abgeglichen werden, um den Ist-Zustand des Strukturbauteils zu bestimmen. Dabei kann auch bei der Bestimmung der Körperschallmuster mit einer Körperschallmuster-Bibliothek gearbeitet werden, aus der für bestimmte Bauteiltypen und/oder Systemtypen charakteristische Körperschallmuster gespeichert sind, die dann anhand der zuvor berechneten bzw. bestimmten Kinematik des konkreten Bauteils bzw. des konkreten Systems angepasst und zu einem adaptierten Körperschallmuster transformiert werden können.

In ähnlicher Weise können auch andere synthetische Schadenscharakteristika anderer Strukturbauteile wie beispielsweise bezüglich der Zahneingriffsfrequenz einer Antriebswelle aus Konstruktionsdaten synthetisch bestimmt werden.

Alternativ oder zusätzlich können aber auch synthetische Schadenscharakteristika auf Basis anderer Systemdaten generiert werden, beispielsweise auf Basis eines Zusammenhangs zwischen Drehzahl und Temperatur über Leistungsdaten. Insbesondere kann davon ausgegangen werden, dass bei einer bestimmten übertragenen Leistung bei einer bestimmten Drehzahl eine bestimmte Temperatur erwartet werden darf und insofern eine Drehzahl-Temperatur-Leistungs-Matrix generiert werden kann. Treten in bestimmten Leistungs- und/oder Drehzahlbereichen außergewöhnliche Temperaturen auf, kann auf einen bestimmten Schadenstypus rückgeschlossen werden.

Um der Komplexität möglicher Schadensbilder besser gerecht zu werden, kann an die aktive Datenbankeinrichtung vorteilhafterweise ein Kombinationsbaustein angebunden sein, der die aus den Konstruktionsdaten synthetisch generierten Schadenscharakteristika miteinander kombiniert und hierdurch kombinierte Schadenscharakteristika schafft, die in der Datenbankeinrichtung bereitgehalten bzw. abgespeichert werden können. Solche kombinierten Schadenscharakteristika können komplexeren Schadensbildern entsprechen, bei denen am entsprechenden Strukturbauteil nicht nur ein spezieller Schadenstypus, wie beispielsweise Ausbrüche in der Wälzlagerring-Laufbahn auftreten, sondern verschiedene Schädigungen gleichzeitig eintreten, beispielsweise neben den besagten Laufbahnausbrüchen auch noch eine Lagerverschmutzung oder eine zu große Lagerluft, die zu unruhigem Lauf führen können.

Der genannte Kombinationsbaustein kann aber nicht nur verschiedene Schädigungsmuster eines Strukturbauteils miteinander kombinieren, sondern alternativ oder zusätzlich hierzu auch die Schadenscharakteristika verschiedener Strukturbauteile miteinander kombinieren, um wechselseitige Einflüsse von Schadenscharakteristika verschiedener Strukturbauteile aufeinander berücksichtigen zu können. Beispielsweise kann ein geschädigtes Lager und der damit einhergehende, unruhige Lauf des Lagers auch Vibrationen einer hierdurch gelagerten Getriebestufe beeinflussen und/oder Auswirkungen auf das Schadensbild der Getriebestufe haben, die von dem Lager rotatorisch abgestützt ist. Der Kombinationsbaustein kann daher vorteilhafterweise dazu konfiguriert sein, verschiedene, synthetisch generierte Schadenscharakteristika eines Strukturbauteils miteinander zu kombinieren und/oder synthetisch generierte Schadenscharakteristika verschiedener Strukturbauteile miteinander zu kombinieren. Die hierdurch kombinatorisch erzeugten Schadenscharakteristika können ebenfalls in der Datenbankeinrichtung abgespeichert bzw. hiervon bereitgehalten werden.

Um eine verlässlichere Bestimmung des Ist-Zustands bzw. der Restlebensdauer zu erzielen, kann in vorteilhafter Weiterbildung der Erfindung eine Gewichtung der einzelnen und/oder kombinierten Schadenscharakteristika vorgesehen sein. Insbesondere kann jedes Sample bzw. jede synthetisch generierte Schadenscharakteristik entsprechend der Auftretenswahrscheinlichkeit, d.h. der Häufigkeit der Ausfallursache der jeweiligen Komponente, gewichtet werden. Schadenscharakteristika mit höherer Auftretenswahrscheinlichkeit können stärker gewichtet werden als Schadenscharakteristika, die relativ selten auftretende Schädigungen wiedergeben.

Der Gewichtungs-Baustein kann dabei dazu konfiguriert sein, die synthetisch generierten Schadenscharakteristika jeweils einzeln zu gewichten. Alternativ oder zusätzlich kann der Gewichtungsbaustein auch die kombinatorisch erzeugten Schadenscharakteristika gewichten, insbesondere anhand der Wahrscheinlichkeit, mit der eine spezifische Schadens-Kombination auftritt.

Bei der Auswertung der sensorisch bestimmten Zustandsinformationen und dem Abgleich mit den bereitgehaltenen Schadenscharakteristika können die Parameter, die die Zustandsinformationen ausmachen, grundsätzlich in verschiedener Weise ausgewertet bzw. in unterschiedlicher Weise mit den Schadenscharakteristika abgeglichen werden. Beispielsweise können auch hier verschiedene Parameter verschieden gewichtet und/oder in unterschiedlicher Weise berücksichtigt werden.

Hierbei kann eine Veränderung eines jeweiligen Parameters jeweils absolut berücksichtigt werden, beispielsweise dahingehend, dass bei Überschreiten eines vorbestimmten Veränderungsbetrags eine Anpassung der vorbestimmten Schadenscharakteristika erfolgt. Alternativ oder zusätzlich kann aber auch eine summarische Berücksichtigung erfolgen, beispielsweise dahingehend, dass bei Überschreiten einer vorbestimmten Veränderung bei summarischer Berücksichtigung mehrerer Parameter eine Anpassung der vorbestimmten Schadenscharakteristika durch die Anpassvorrichtung erfolgt.

Die Anpassvorrichtung kann die Schadenscharakteristika in verschiedener Weise an die ausgewerteten, realen Zustandsinformationen bzw. mithilfe dieser Zustandsinformationen anpassen.

In Weiterbildung der Erfindung erfolgt die Anpassung der Zustandssignal-Auswertung und/oder der von der Datenbank bereitgehaltenen Schadenscharakteristiken an sich verändernde Zustands- und/oder Betriebsbedingungen des Strukturbauteils bzw. Alterungseinflüsse nicht anhand von starren Kriterien, sondern mit Hilfe eines sich selbst weiterbildenden, variablen Regelsatzes. Insbesondere ist in Weiterbildung der Erfindung die genannte Auswerteeinrichtung und die Anpasseinrichtung als selbstlernendes System ausgebildet bzw. bilden die genannten Komponenten einen Teil eines selbstlernenden Systems, das den Einfluss der erfassten Zustands- und/oder Betriebsinformationen bzw. der daraus abgeleiteten realen Informationsmuster auf die Schadenscharakteristika bzw. auf den ein Schadensbild des repräsentierenden Parametersatz abschätzen kann.

Insbesondere können die Auswerteeinrichtung und die genannte Anpasseinrichtung mit künstlicher Intelligenz ausgebildet bzw. in einem KI-System implementiert sein, das beispielsweise einen Regressionsanalysebaustein aufweisen kann, um eine Beziehung zwischen den erfassten Zustands- und/oder Betriebsinformationen und den synthetisch generierten Zustands- bzw. Schadens-Referenzmustern der Arbeitsmaschine bzw. des Strukturbauteils abschätzen kann. Beispielsweise kann der genannte Regressionsanalysebaustein einen funktionellen Zusammenhang zwischen den genannten Parametern bzw. eine Kurve, die die Abhängigkeit des Istzustands bzw. der Restlebensdauer von den genannten realen Zustandsparametern charakterisiert, anpasst bzw. weiterbildet, vorzugsweise unter Heranziehung der laufend erfassten Zustandsveränderungen und der sich einstellenden Istzustands- bzw. Restlebensdauerprognose, insbesondere unter weiterer Zuhilfenahme eines Trainingssatzes der genannten Parameter. Der genannte Trainingssatz von Parametern kann ursprünglich vorgegeben, bspw. anhand eines oder mehrerer Testläufe gewonnen werden, und/oder laufend fortgeschrieben oder erweitert werden, insbesondere durch im Maschinenbetrieb gewonnene Daten.

Insbesondere kann die Vorrichtung mittels künstlicher Intelligenz die ständig gemessene Zustandsantwort des Strukturbauteils bzw. der gesamten Arbeitsmaschine oder einer Unterbaugruppe hiervon mit dem hierfür charakteristischen Zustands- bzw. Betriebsverhalten und/oder Schadensbild vergleichen, um Schädigungen an einem oder mehreren Strukturbauteilen, insbesondere eine Rissbildung zu identifizieren.

Mittels des KI-Systems können die Referenzbeispiele der Schadenscharakteristika der Arbeitsmaschine bzw. des oder der Strukturbauteile insbesondere in Abhängigkeit von den erfaßten, realen Parametersätzen der Arbeitsmaschine und/oder des Strukturbauteils, die den realen Maschinenzustand wiedergeben, und deren Veränderungen angepasst werden. Hierdurch kann die Prognose immer scharf gehalten und die Fehlerquote minimiert werden.

Um die Arbeitsmaschine insgesamt besser auf Schädigungen überwachen zu können, können mehreren Strukturbauteilen, bspw. Wälzlagern, der Anlage Sensoren zur Erfassung relevanter Zustandsparameter wie Vibrationen oder Körperschall zugeordnet sein.

Die Auswerteeinrichtung kann die Zustandsinformationen der verschiedenen Strukturbauteile, bspw. verschiedener Wälzlager, miteinander vergleichen, um Veränderungen des Zustands bzw. des diesen repräsentierenden Parametersatzes an einem Strukturbauteil mit einhergehenden Veränderungen der Zustandsinformationen an einem oder mehreren anderen Strukturbauteil zu vergleichen und insofern abnormale Veränderungen des Zustands präziser erfassen zu können. Ein solcher Vergleich kann zusätzlich zu der genannten Anpassung der Auswertekriterien und/oder des Signalreferenzmusters vorgenommen werden.

In Weiterbildung der Erfindung kann das Strukturbauteil bspw. ein Wälzlager oder Großwälzlager, beispielsweise ein mittenfreies Großwälzlager mit einem Durchmesser von mehr als 0,5 m oder mehr als 1,0 m sein und hinsichtlich des Überroll-Frequenzmusters und/oder der Körperschallemissionen und/oder des Temperaturverlaufs über der Einschaltdauer und/oder eines Geräuschemissionsmusters überwacht werden.

Die Erfindung wird nachfolgend anhand eines bevorzugten Ausführungsbeispiels und zugehöriger Zeichnungen näher erläutert. In den Zeichnungen zeigen:

Fig. 1:   eine Darstellung einer Vorrichtung zum Bestimmen des Ist-Zustands und/oder der Restlebensdauer von Strukturbauteilen einer Arbeitsmaschine nach einer vorteilhaften Ausführung der Erfindung,

Fig. 2:   eine Darstellung der Vorrichtung aus Fig. 1 mit ergänzenden Details in den einzelnen Komponenten der Vorrichtung,

Fig. 3:   eine Darstellung des Frequenzbilds entsprechend einem Schadmuster und dessen Transformation zu einer spezifisch auf das interessierende System adaptierten Frequenzschadssignatur, und

Fig. 4:   eine schematische Darstellung des synthetischen Generierens einer Schadenscharakteristik ausgehend von einem durch Strukturanalyse generierten Grundschwingungsbild und dessen Transformation zu einem spezifischen Schadenscharakteristikbild.

Wie die Figuren zeigen, umfasst das Condition Monitoring System 1 eine aktive, selbstimplementierende Datenbank 2, die eine Vielzahl von synthetisch generierten Schadenscharakteristiken als Referenzbeispiele 3 in Form von Datensätzen bereithält, die verschiedene Schadensbilder eines Strukturbauteils 4 angeben und Parameter beinhalten, an denen sich das jeweilige Schadensbild festmacht bzw. die für das jeweilige Schadensbild charakteristisch sind.

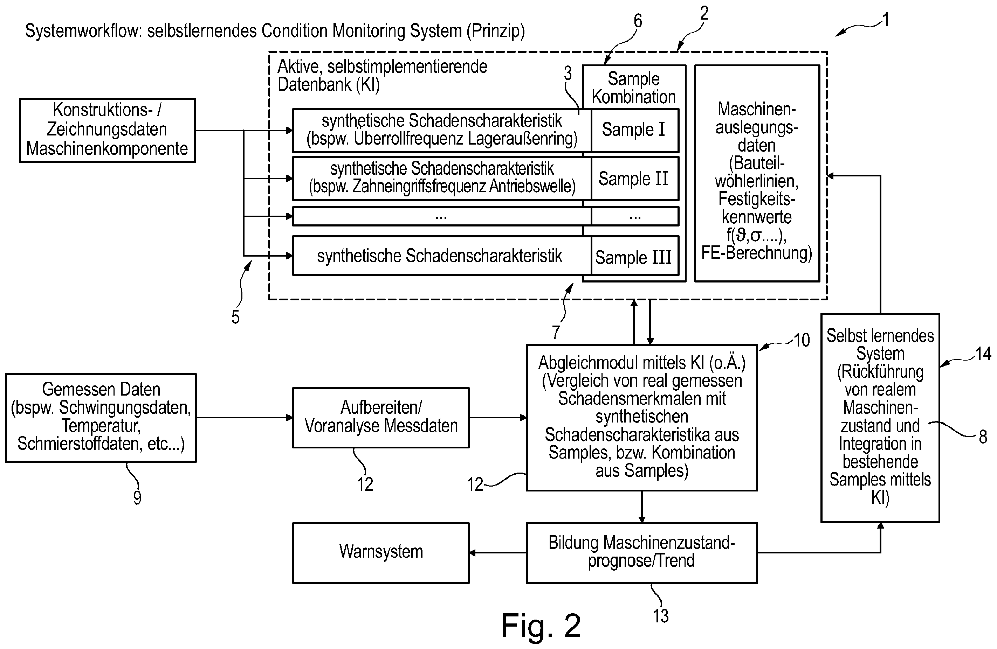

Wie Figur 2 zeigt, kann ein als "Sample I" bezeichnetes Referenzbeispiel 3 die Überrollfrequenz eines Lagerrings, beispielsweise eines Lageraußenrings eines Wälzlagers enthalten, wobei die genannte Überrollfrequenz das genannte Frequenzspektrum beispielsweise für verschiedene Schädigungsgrade und ggf. auch für den ungeschädigten Zustand für eine oder mehrere Drehzahlen enthalten kann.

Ein weiteres, als "Sample II" bezeichnetes Referenzbeispiel 3 kann die Schadenscharakteristik eines Antriebsbausteins enthalten, beispielsweise in Form der Zahneingriffsfrequenz einer Antriebswelle.

Diverse weitere Referenzbeispiele können beispielsweise einen Temperaturverlauf eines Lagers über die Laufzeit und/oder über die Zeit nach Abschaltung, oder ein Schallemissionsspektrum eines Wälzlagers, oder ein Vibrationsmuster eines Bauteils oder andere charakteristische Schadensbilder enthalten.

Wie die Figuren zeigen, kann an die Datenbank 2 eine Bestimmungseinrichtung 5 angebunden sein, die die genannten synthetischen Schadenscharakteristika automatisch aus bereitgestellten Konstruktionsdaten zu dem jeweiligen Strukturbauteil 4 generiert, insbesondere aus Geometrie- und/oder Zeichnungs- und/oder Material- und/oder Werkstoffdaten berechnet. Eine solche Bestimmungseinrichtung kann die Schadenscharakteristika für ein jeweiliges Strukturbauteil ggf. auch abschätzen, unter Zuhilfenahme gespeicherter Datensätze für ähnliche Strukturbauteile, und/oder aus bekannten, typischen Schadenscharakteristika für ein bestimmtes Strukturbauteil die synthetische Schadenscharakteristik für das interessierende Strukturbauteil abschätzen, beispielsweise durch Inter- und/oder Extrapolation auf Basis der Geometriedaten.

Für die synthetische Generierung von Schadenscharakteristika kann zunächst die Kinematik des konkreten, interessierenden Systems berechnet werden. Insbesondere können für beliebige Maschinenkomponenten wie beispielsweise Wälzlager, Verzahnungen oder Wellen kinematische Frequenzen ausgerechnet werden. Mit Kinematik ist dabei eine Beschreibung des Systems durch dessen Geometrie und zeitlich veränderliche Parameter unabhängig von Kräften und Energien gemeint.

Betrachtet man beispielsweise ein Wälzlager, kann die Kinematik folgendermaßen bestimmt werden, wobei beispielsweise als Geometriedaten die Wälzkörperanzahl z, der Wälzkörperdurchmesser $D_W$, der Teilkreisdurchmesser $D_{PW}$ unter Berührwinkel $\alpha$ als bekannt vorausgesetzt oder ggf. aus einer Konstruktionsdatenbank erhalten werden können. Dabei können zur Bestimmung der Kinematik des Wälzlagers folgende Schritte ausgeführt werden:

Berechnung der Umdrehungsfrequenz des Wälzkörpers

$$n_W = \pm \frac{n}{2} \cdot \left( \frac{D_{pw}}{D_W} - \frac{D_W \cdot \cos^2 \alpha}{D_{pw}} \right)$$

$\rightarrow$

Berechnung der Überrollfrequenz am Innenring

$$u_j = \frac{z}{2} \cdot \left( 1 + \frac{D_W \cdot \cos \alpha}{D_{pw}} \right)$$

$\rightarrow$

Berechnung der Überrollfrequenz am Außenring

$$u_A = \frac{z}{2} \cdot \left( 1 - \frac{D_W \cdot \cos \alpha}{D_{pw}} \right)$$

$\rightarrow$

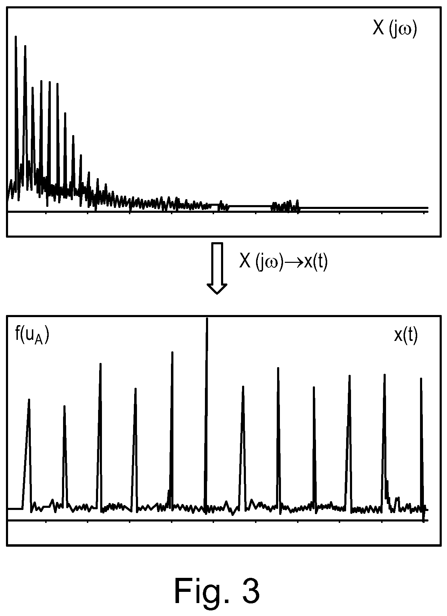

Um ein Schadensmuster beispielsweise für einen Schaden des Außenrings des Wälzlagers zu generieren, kann folgendermaßen vorgegangen werden, vgl. insbesondere auch Figur 3.

- Generieren von Spektren mit entsprechender Schadinformation
- Aus Berechnung der Überrollfrequenz am Außenring uA kann im Frequenzbereich Schadenssignatur für beispielsweise Lager Außenringschaden generiert werden (Schadmuster sind bekannt (aus Literatur) bzw. liegen aus anderen Messungen vor.

  Dabei kann ein normierter Datensatz mittels Kinematik auf geometrische Varianten umgerechnet werden.

  Hierdurch kann das Frequenzmuster gemäß Fig. 3 oberer Teil erhalten werden.

- Transformieren der Schadsignatur im Frequenzbereich ($\hat{f}$) in den Zeitbereich (f) $\rightarrow$ X (jw) -> x (t) zur Erzeugung der Anregungsstöße entsprechend der Maschinen-Schadcharakteristik $f$ (uA), vgl. Fig. 3, unterer Teil.

Alternativ oder zusätzlich kann für die Erstellung eines Schadmusters, das einen Außenringschaden des Wälzlagers wiedergibt, folgendermaßen vorgegangen werden:

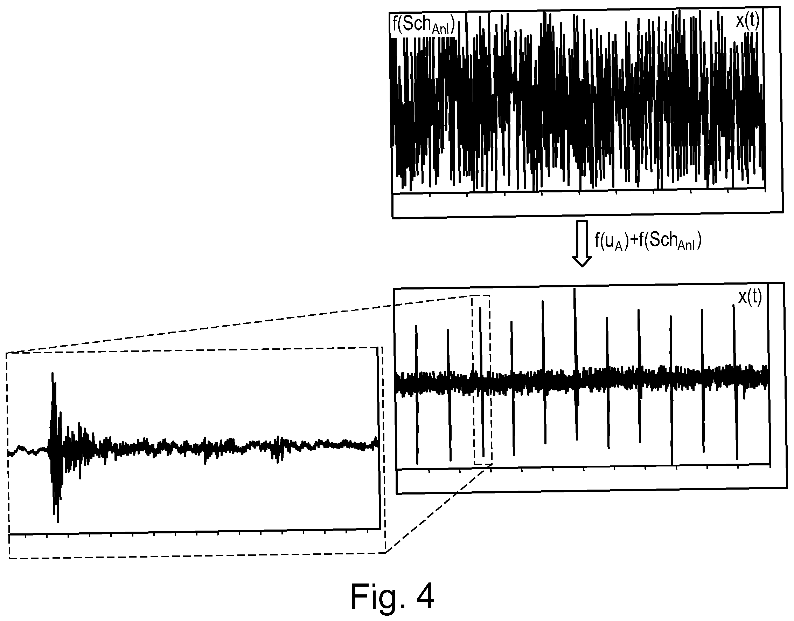

- Generieren von Spektren mit entsprechender Schadinformation
- Aus Strukturanalyse (bspw. Aus FE-Simulation) kann Eigenschwingungsform der Struktur bestimmt werden → Erzeugen von Grundschwingung $f(Sch_{Ani})$, vgl. Fig. 4 oberer Teil
- Überlagerung der Maschinen-Schadcharakteristik $f(u_A)$ und der Grundschwingung $f(Sch_{Ani})$ zur Erzeugung von synthetisch generierten Schadenscharakteristiken/Samples, vgl. Fig. 4 unterer Teil.

Vorteilhafterweise kann durch die Kombination der synthetischen Schadenscharakteristiken bzw. Samples die Körperschallsignatur eines Systems bzw. eines interessierten Bauteils bereits in der Konstruktionsphase generiert werden, wodurch das bei bisherigen Monitoringsystemen notwendige, aufwendige Anlernen mittels realer Maschinenausfälle und ggf. unter Verwendung von künstlicher Intelligenz ausgeführt werden kann, vermieden werden kann. Ohne synthetische Generierung einer Körperschallsignatur bzw. einer Schadenscharakterisik auf Basis der Konstruktionsdaten müssten mindestens 7 bis 8 reale Systeme, die dem interessierten System entsprechen, im Versuch mit bekannten Ausfällen untersucht werden. Im Gegensatz hierzu stehen durch die synthetisch generierten Schadenscharakteristiken dem KI-Baustein bereits mehr als 2/3 der zu erwartenden Schadensmuster zur Verfügung, was die Anlernzeit und den Anlernaufwand zur Verfeinerung des Systems beträchtlich reduziert. Beispielsweise können die restlichen, noch fehlenden bzw. nicht synthetisch generierten Schadenscharakteristiken beispielsweise in der Größenordnung von 20% durch ein selbstlernendes System rückgeführt werden.

Um komplexeren Schadensbildern oder Abnutzungserscheinungen gerecht zu werden, ist der aktiven, selbstimplementierenden Datenbank 2 vorteilhafterweise ein Kombinationsbaustein 6 zugeordnet, der die von der Bestimmungseinrichtung 5 aus den Konstruktionsdaten synthetisch bestimmten Schadenscharakteristika miteinander kombiniert und hierdurch kombinatorische Schadenscharakteristiken generiert.

Vorteilhafterweise kann den Schadenscharakteristiken, beispielsweise den synthetisch generierten Schadenscharakteristiken und/oder den kombinatorisch ermittelten Schadenscharakteristiken, eine Gewichtung gegeben werden, die von einem Gewichtungsbaustein 7 erzeugt werden kann, insbesondere auf Basis der Wahrscheinlichkeit eines Auftretens eines jeweiligen Schadenfalls.

Die genannte Datenbank 2 bzw. die dieser zugeordneten Bausteine zur Bestimmung der Schadenscharakteristiken, d.h. insbesondere die Bestimmungseinrichtung 5 und/oder der Kombinationsbaustein 6 und/oder der Gewichtungsbaustein 7 können Teil eines selbstlernenden KI-Systems 8 sein oder von einem solchen KI-System 8 gebildet sein, das mit künstlicher Intelligenz ausgestattet ist und eine Beziehung zwischen einem bestimmten Zustandsparameter oder mehreren Zustandsparametern eines Strukturbauteils und einem Schadensbild des Strukturbauteils bzw. dessen Ist-Zustand und/oder Restlebensdauer abschätzen bzw. bestimmen kann, wobei das KI-System beispielsweise einen Regressionsanalysebaustein aufweisen kann, um die genannte Beziehung zwischen einem Parameter oder einem Parametersatz und dem Ist-Zustand bzw. der Restlebensdauer des Strukturbauteils anhand sich einstellender Veränderungen anpassen kann.

Wie die Figuren weiterhin zeigen, umfasst das Condition Monitoring System 1 ferner eine Sensorik 9, die verschiedene Sensoren zum Messen bzw. Erfassen relevanter Zustandsgrößen oder Parameter des interessierenden Strukturbauteils 4 umfassen kann, wobei die genannten Sensoren je nach Strukturbauteil unterschiedlich beschaffen sein können.

Beispielsweise kann die genannte Sensorik 9 einen Körperschallsensor und/oder einen Wegsensor und/oder einen Geschwindigkeitssensor und/oder einen Beschleunigungssensor und/oder einen Temperatursensor umfassen, um entsprechende Zustandsgrößen am Strukturbauteil 4 oder damit verbundenen Umgebungsbauteilen erfassen zu können, beispielsweise Schwingungsdaten, Temperaturdaten, Schmierstoffdaten, Geräuschemissionsdaten oder andere relevante Zustandsinformationen des Strukturbauteils 4.

Die genannten Zustandsinformationen, die von der Sensorik 9 erfasst und bereitgestellt werden, können durch eine Auswerteeinrichtung 10 ausgewertet und mit den von der Datenbank 2 bereitgestellten Schadenscharakteristiken verglichen werden, um den Ist-Zustand und/oder die Restlebensdauer des Strukturbauteils 4 zu bestimmen. Wie Figur 2 zeigt, kann die genannte Auswerteeinrichtung 10 ein Auswertemodul 11 umfassen, das real gemessene Schadens- bzw. Zustandsmerkmale mit den synthetischen Schadenscharakteristiken aus den Referenzbeispielen 3 bzw. den daraus gebildeten, kombinatorischen Schadenscharakteristiken vergleicht. Vorgeschaltet zu einem solchen Auswertemodul 11 kann ein Voranalyse- und/oder Aufbereitungsmodul 12 vorgesehen sein, das die sensorisch erfassten Zustandsinformationen aufbereitet und/oder voranalysiert, beispielsweise durch einen Filter oder andere Signalverarbeitungsbausteine.

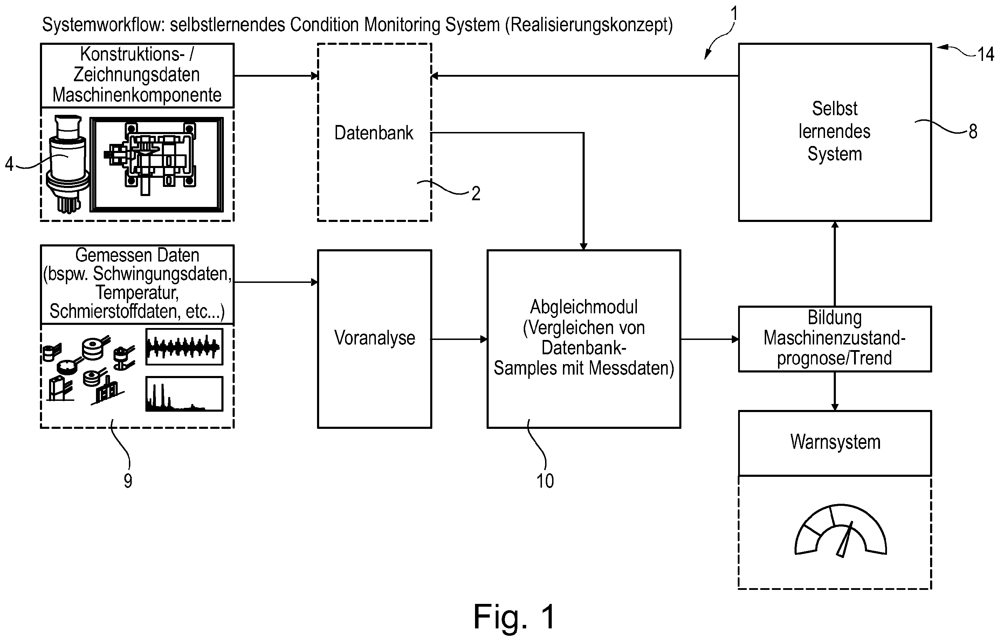

Anhand der Auswertung der Auswerteeinrichtung 10 kann ein Prognose- und/oder Trendanalysebaustein 13 eine Prognose für den Ist-Zustand und/oder einen Trend für den Ist-Zustand des Strukturbauteils und/oder der gesamten Maschine abgeben, vgl. Figur 1 und Figur 2.

Wie die Figuren zeigen, umfasst das Condition Monitoring System 1 ferner eine Anpasseinrichtung 14, die die von der Datenbank 2 bereitgehaltenen Schadenscharakteristiken anhand der Auswertungen der Auswerteeinrichtung 10 bzw. anhand der bestimmten Zustands- und/oder Restlebensdauer-Informationen anpasst.

Die genannte Anpasseinrichtung 14 ist vorzugsweise Teil eines selbstlernenden KI-Systems oder wird von einem solchen KI-System 8 gebildet, welches eine Rückführung von realen Maschinenzustandsdaten und/oder eine Integration in die bestehenden Referenzbeispiele 3 mittels künstlicher Intelligenz vorsieht.

Insbesondere kann das KI-System 8 die synthetischen Schadenscharakteristiken und/oder die hieraus kombinatorisch gebildeten Schadenscharakteristiken in Abhängigkeit relevanter Maschinenzustands- und/oder Umweltparameter anpassen, insbesondere beispielsweise in Abhängigkeit vom Alter des Strukturbauteils 4, dem Maschinen- und/oder Betriebszustand und den Veränderungen von Umwelteinflüssen anpassen. Hierdurch kann die Prognose immer scharf gehalten und die Fehlerquote minimiert werden.

Das Condition Monitoring System 1 greift somit insbesondere auf ein Datenanalysemodell auf Basis von synthetisch generierten Maschinenbetriebs-Charakteristika zurück.

Hierzu werden ausgehend von der Konstruktion einer Komponente/ eines Produktes synthetische Betriebs-Charakteristika in Form von Samples künstlich generiert. Dabei entspricht jedes Sample einer spezifischen Schadenscharakteristik einer bestimmten Komponente (Bspw. Überrollfrequenz Lageraußenring, Zahneingriffsfrequenz Antriebswelle, o.Ä.) welche aus Geometrie-/ Zeichnungsdaten berechnet werden kann.

Durch Kombination der spezifischen, synthetischen Samples wird ein komplexes Bild aller möglichen, messbaren Schadformen erzeugt. Diese Datenbank kann im Nachhinein mit den gemessenen Schadensmerkmalen (bspw. durch Körperschall etc.) verglichen und der Zustand der Komponente bewertet werden. Durch die große Menge an Variationen findet der Vergleich mittels Künstlicher Intelligenz (KI) oder eine vergleichbaren Feature Erkennung statt.

Die Samples bzw. Referenzbeispiele der Schadenscharakteristiken, sowie die Kombination selbiger kann bereits im Vorhinein in einer Abgleich-Datenbank hinterlegt und der jeweiligen Komponente zugeordnet werden.

In einer weiteren Ausbaustufe kann jedes Sample entsprechend der Auftretenswahrscheinlichkeit (Häufigkeit der Ausfallursache der jeweiligen Komponente) gewichtet werden.

Entsprechend der Lernfähigkeit des Systems kann die Sample-Datenbank der Schadensmerkmale erweitert werden. Durch die nachgelagerte Schadensanalyse kann das System darüber hinaus "belohnt" werden, um die Erkennungsrate für verwandte Samples (bspw. anderer, jedoch ähnlicher Komponenten) verbessern zu können.

**Patentansprüche**

**1.** Vorrichtung zum Bestimmen des Ist-Zustands und/oder der Restlebensdauer von Strukturbauteilen (4), beispielsweise Großwälzlagern, einer Arbeitsmaschine, insbesondere Bau-, Materialumschlags- und/oder Fördermaschine, mit einer Sensorik (9) zum Erfassen von Zustandsinformationen betreffend das Strukturbauteil (4) sowie einer Auswerteeinrichtung (10) zum Auswerten der erfassten Zustandsinformationen und Bestimmen des Ist-Zustands und/oder der Restlebensdauer anhand eines Vergleichs mit vorbestimmten Schadenscharakteristiken, wobei eine aktive Datenbankeinrichtung (2) zum Bereithalten der Schadenscharakteristiken vorgesehen ist, an die eine Bestimmungseinrichtung (5) zum Bestimmen der Schadenscharakteristiken aus Konstruktionsdaten des Strukturbauteils (4) sowie eine Anpasseinrichtung (14) zum Anpassen der vorbestimmten Schadenscharakteristiken anhand der von der Auswerteeinrichtung (10) bestimmten Zustands- und/oder Restlebensdauer-Informationen angebunden sind,
**dadurch gekennzeichnet, dass**

die Bestimmungseinrichtung (5) dazu ausgebildet ist, zum Bestimmen synthetischer Schadenscharakteristiken aus Geometriedaten des Strukturbauteils (4) kinematische Frequenzen des Strukturbauteils (4) zu bestimmen, um aus den kinematischen Frequenzen ein Schadensfrequenzbild für das Strukturbauteil (4) zu generieren, wobei die Bestimmungseinrichtung (5) einen Anpassbaustein umfasst, der dazu ausgebildet ist, Frequenzmuster, die verschiedenen Schadensmustern und/oder -typen entsprechen, unter Zugrundelegen der Geometriedaten des Strukturbauteils (4) in adaptierte Frequenzmuster, die verschiedene Schadensmuster und/oder -typen des konkreten Strukturbauteils (4) entsprechen, zu transformieren.

**2.** Vorrichtung nach dem vorhergehenden Anspruch, wobei die Bestimmungseinrichtung (5) zum synthetischen Bestimmen der Schadenscharakteristiken einen Strukturanalysebaustein zum Bestimmen von Grundschwingungen des Strukturbauteils (4) aufweist und einen Überlagerungsbaustein zum Überlagern der bestimmten Grundschwingung mit Frequenzmustern, die verschiedene Schadensmuster und/oder -typen angeben, aufweist, um durch die genannte Überlagerung synthetisch generierte, an das Strukturbauteil (4) adaptierte Schadenscharakteristiken zu erzeugen.

3. Vorrichtung nach dem vorhergehenden Anspruch, wobei die Auswerteeinrichtung (10) und/oder die Anpasseinrichtung (14) als ein selbstlernendes System und/oder als Teil eines selbstlernenden Systems (8) ausgebildet sind, das die sensorisch erfassten Zustandsinformationen und/oder die daraus abgeleiteten Ist-Zustände und/oder Restlebensdauern an die Datenbank (2) rückführt und/oder in die von der Datenbank (2) bereitgehaltenen Schadenscharakteristiken integriert.

4. Vorrichtung nach dem vorhergehenden Anspruch, wobei das selbstlernende System einen Regressionsanalysebaustein zum Bestimmen des Einflusses bestimmter Schadensbilder und/oder bestimmter Ist-Zustände auf schadenscharakterisierende Parameter des Strukturbauteils wie Körperschallsignalreferenzmuster, Überrollfrequenzbilder oder Zahneingriffsfrequenzbilder des Strukturbauteils per Regressionsanalyse aufweist.

5. Vorrichtung nach einem der beiden vorhergehenden Ansprüche, wobei das selbstlernende System (8) einen KI-basierten Schätzbaustein zum Abschätzen von Zusammenhängen zwischen erfassten Ist-Zustands-Informationsmustern und synthetisch generierten Schadenscharakteristiken und/oder zwischen erfassten Ist-Zustands-Informationsmustern und einem Schadensbild oder einer Restlebensdauer des Strukturbauteils aufweist.

6. Vorrichtung nach einem der vorhergehenden Ansprüche, wobei der Bestimmungseinrichtung (5) ein Kombinationsbaustein (6) zum Kombinieren der von der Bestimmungseinrichtung (5) synthetisch generierten Schadenscharakteristiken und Bereitstellen kombinatorischer Schadenscharakteristiken zugeordnet ist, wobei die Auswerteeinrichtung (10) dazu konfiguriert ist, die von der Sensorik (9) erfassten Zustandsinformationen mit den kombinatorischen Schadenscharakteristiken abzugleichen.

7. Vorrichtung nach einem der vorhergehenden Ansprüche, wobei der Bestimmungseinrichtung (5) ein Gewichtungsbaustein (7) zum Gewichten der Schadenscharakteristiken anhand einer Auftretenswahrscheinlichkeit eines zur Schadenscharakteristik zugehörigen Schadenfalls zugeordnet ist.

8. Vorrichtung nach einem der vorhergehenden Ansprüche, wobei die Sensorik (9) zumindest einen Sensor aus der Sensorgruppe Schwingungssensor, Temperatursensor, Schmierstoffsensor, Körperschallsensor, Beschleunigungssensor, Wegsensor und Drehzahlsensor aufweist und die Anpasseinrichtung (14) dazu ausgebildet ist, die von der Datenbank (2) bereitgehaltenen Schadenscharakteristiken in Abhängigkeit zumindest eines Signals zumindest eines der genannten Sensoren anzupassen.

## Claims

1. An apparatus for determining the actual state and/or the remaining service life of structural components (4), for example large-diameter rolling bearings, of a work machine, in particular a construction machine, a material-handling machine and/or a conveyor machine, comprising a sensor system (9) for acquiring state information relating to the structural component (4), and an evaluation device (10) for evaluating the acquired state information and determining the actual state and/or the remaining service life on the basis of a comparison with predetermined damage characteristics, wherein an active database device (2) is provided for storing the damage characteristics, to which a determination device (5) for determining the damage characteristics from design data of the structural component (4), and an adjustment device (14) for adjusting the predetermined damage characteristics on the basis of the state and/or the remaining service life information determined by the evaluation device (10) are connected,

   **characterized in that**

   the determination device (5) is configured, for determining synthetic damage characteristics, to determine kinematic frequencies of the structural component (4) from geometry data of the structural component (4) in order to generate a damage frequency image for the structural component (4) from the kinematic frequencies, wherein the determination device (5) comprises an adjustment module configured to transform frequency patterns corresponding to different damage patterns and/or types into adapted frequency patterns corresponding to different damage patterns and/or types of the specific structural component (4) based on the geometry data of the structural component (4).

2. The apparatus according to the foregoing claim, wherein the determination device (5) for synthetically determining the damage characteristics comprises a structural analysis module for determining fundamental oscillation of the structural component (4) and comprises a superimposition module for superimposing frequency patterns indicative of different damage patterns and/or types on the determined fundamental oscillation in order to generate synthetically generated damage characteristics adapted to the structural component (4) by said superimposition.

3. The apparatus according to the foregoing claim, wherein the evaluation device (10) and/or the adjustment device (14) are configured as a self-learning system and/or as part of a self-learning system (8) which feeds back the sensorily detected state information and/or the actual states and/or remaining service lives derived therefrom to the database (2) and/or integrates them into the damage characteristics stored by the database (2).

4. The apparatus according to the foregoing claim, wherein the self-learning system comprises a regression analysis module for determining the influence of determined damage patterns and/or determined actual states on damage characterizing parameters of the structural component such as structure-borne sound signal reference patterns, roll-over frequency patterns or tooth mesh frequency patterns of the structural component by regression analysis.

5. The apparatus according to one of the two foregoing claims, wherein the self-learning system (8) comprises a KI-based estimation module for estimating correlations between acquired actual state information patterns and synthetically generated damage characteristics and/or between acquired actual state information patterns and a damage pattern or a remaining service life of the structural component.

6. The apparatus according to one of the foregoing claims, wherein a combination module (6) for combining the damage characteristics synthetically generated by the determination device (5) and providing combinatorial damage characteristics is associated with the determination device (5), wherein the evaluation device (10) is configured to match the state information acquired by the sensor system (9) with the combinatorial damage characteristics.

7. The apparatus according to one of the foregoing claims, wherein a weighting module (7) for weighting the damage characteristics on the basis of an occurrence probability of a damage event corresponding to the damage characteristic is associated with the determination device (5).

8. The apparatus according to one of the foregoing claims, wherein the sensor system (9) comprises at least one sensor from the group of sensors: oscillation sensors, temperature sensors, lubricant sensors, structure-borne sound sensors, acceleration sensors, displacement sensors and speed sensors, the adjustment device (14) being configured to adjust the damage characteristics stored by the database (2) depending on at least one signal from the at least one said sensor.

**Revendications**

1. Dispositif pour déterminer l'état réel et/ou la durée de vie restante de composants structurels (4), par exemple de paliers à roulement de grande taille, d'une machine de travail, notamment d'une machine de chantier, de manutention de matériaux et/ou de transport, avec un système de détection (9) pour acquérir des informations d'état concernant le composant structurel (4), ainsi qu'un appareil d'évaluation (10) pour évaluer les informations d'état acquises et déterminer l'état réel et/ou la durée de vie restante à l'aide d'une comparaison avec des caractéristiques d'endommagement prédéterminées, où un appareil de base de données actif (2) est prévu pour mettre à disposition les caractéristiques d'endommagement, auquel est relié un appareil de détermination (5) pour déterminer les caractéristiques d'endommagement à partir de données de construction du composant structurel (4), ainsi qu'un appareil d'adaptation (14) pour adapter les caractéristiques d'endommagement prédéterminées à l'aide des informations d'état et/ou de durée de vie restante déterminées par l'appareil d'évaluation (10),
**caractérisé en ce que**

l'appareil de détermination (5) est réalisé, pour la détermination de caractéristiques d'endommagement synthétiques, pour déterminer des fréquences cinématiques du composant structurel (4) à partir de données géométriques du composant structurel (4), afin de générer à partir des fréquences cinématiques un profil de fréquence d'endommagement pour le composant structurel (4),
l'appareil de détermination (5) comprenant un module d'adaptation réalisé pour transformer des schémas de fréquence correspondant à différents schémas et/ou types d'endommagement en schémas de fréquence adaptés correspondant à différents schémas et/ou types d'endommagement du composant structurel concret (4) sur la base des données géométriques du composant structurel (4).

2. Dispositif selon la revendication précédente, où l'appareil de détermination (5) pour la détermination synthétique des caractéristiques d'endommagement présente un module d'analyse structurelle pour déterminer des vibrations

**EP 4 291 885 B1**

fondamentales du composant structurel (4) et un module de superposition pour superposer la vibration fondamentale déterminée à des schémas de fréquence qui indiquent différents schémas et/ou types d'endommagement, afin de générer, par ladite superposition, des caractéristiques d'endommagement générées de manière synthétique, adaptées au composant structurel (4).

**3.** Dispositif selon la revendication précédente, où l'appareil d'évaluation (10) et/ou l'appareil d'adaptation (14) sont réalisés sous la forme d'un système auto-apprenant et/ou en tant que partie d'un système auto-apprenant (8) qui renvoie les informations d'état acquises par détection et/ou les états réels et/ou les durées de vie restantes dérivés de celles-ci à la base de données (2) et/ou les intègre dans les caractéristiques d'endommagement mises à disposition par la base de données (2).

**4.** Dispositif selon la revendication précédente, où le système auto-apprenant présente un module d'analyse de régression pour déterminer l'influence de profils d'endommagement déterminés et/ou d'états réels déterminés sur des paramètres caractéristiques de l'endommagement du composant structurel, tels que des schémas de référence de signaux de bruit structurel, des profils de fréquence de roulement ou des profils de fréquence d'engrènement des composants structurels par analyse de régression.

**5.** Dispositif selon l'une quelconque des deux revendications précédentes, où le système auto-apprenant (8) présente un module d'estimation basé sur l'intelligence artificielle pour estimer les relations entre des schémas d'informations d'état réel acquis et des caractéristiques d'endommagement générées de manière synthétique et/ou entre des schémas d'informations d'état réel acquis et un profil d'endommagement ou une durée de vie restante du composant structurel.

**6.** Dispositif selon l'une quelconque des revendications précédentes, où l'appareil de détermination (5) est associé à un module de combinaison (6) pour combiner les caractéristiques d'endommagement générées de manière synthétique par l'appareil de détermination (5) et fournir des caractéristiques d'endommagement combinatoires, où l'appareil d'évaluation (10) est configuré pour comparer les informations d'état acquises par le système de détection (9) avec les caractéristiques d'endommagement combinatoires.

**7.** Dispositif selon l'une quelconque des revendications précédentes, où l'appareil de détermination (5) est associé à un module de pondération (7) pour pondérer les caractéristiques d'endommagement à l'aide d'une probabilité d'occurrence d'un sinistre associé à la caractéristique d'endommagement.

**8.** Dispositif selon l'une quelconque des revendications précédentes, où le système de détection (9) présente au moins un capteur parmi le groupe de capteurs comprenant un capteur de vibrations, un capteur de température, un capteur de lubrifiant, un capteur de bruit structurel, un capteur d'accélération, un capteur de déplacement et un capteur de vitesse de rotation, et l'appareil d'adaptation (14) est réalisé pour adapter les caractéristiques d'endommagement mises à disposition par la base de données (2) en fonction d'au moins un signal d'au moins un des capteurs mentionnés.

Fig. 1

Systemworkflow: selbstlernendes Condition Monitoring System (Realisierungskonzept)

Selbst lernendes System

Bildung Maschinenzustand-prognose/Trend

Warnsystem

Abgleichmodul (Vergleichen von Datenbank-Samples mit Messdaten)

Datenbank

Voranalyse

Konstruktions- / Zeichnungsdaten Maschinenkomponente

Gemessen Daten (bspw. Schwingungsdaten, Temperatur, Schmierstoffdaten, etc...)

Fig. 2

Systemworkflow: selbstlernendes Condition Monitoring System (Prinzip)

Aktive, selbstimplementierende Datenbank (KI)

Konstruktions- / Zeichnungsdaten Maschinenkomponente

synthetische Schadenscharakteristik (bspw. Überrollfrequenz Lageraußenring) — Sample I

synthetische Schadenscharakteristik (bspw. Zahneingriffsfrequenz Antriebswelle) — Sample II

... — ...

synthetische Schadenscharakteristik — Sample III

Sample Kombination

Maschinen-auslegungsdaten (Bauteilwöhlerlinien, Festigkeitskennwerte $f(\vartheta,\sigma....)$, FE-Berechnung)

Gemessen Daten (bspw. Schwingungsdaten, Temperatur, Schmierstoffdaten, etc...)

Aufbereiten/ Voranalyse Messdaten

Abgleichmodul mittels KI (o.Ä.) (Vergleich von real gemessen Schadensmerkmalen mit synthetischen Schadenscharakteristika aus Samples, bzw. Kombination aus Samples)

Selbst lernendes System (Rückführung von realem Maschinenzustand und Integration in bestehende Samples mittels KI)

Warnsystem

Bildung Maschinenzustandprognose/Trend

EP 4 291 885 B1

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 8144312 A
- DE 4447288 A1
- US 2021072727 A1
- EP 2402731 A1
- DE 10145571 A1

### In der Beschreibung aufgeführte Nicht-Patentliteratur

- **MICHAEL OSTERKAMP et al.** *SIGNAL UND DRAHT: SIGNALLING & DATACOMMUNICATION*, 10 April 2017, vol. 109, ISSN 0037-4997, 65-72